# EUROPÄISCHE PATENTSCHRIFT

(11) **EP 3 646 459 B1**
(45) Veröffentlichungstag und Bekanntmachung des Hinweises auf die Patenterteilung: **04.08.2021**
(21) Anmeldenummer: 18746830.1
(22) Anmeldetag: 22.06.2018
(51) Int. Cl.: H02N 2/04, H02N 2/00, H02N 2/10, H02N 2/12

(54) **ROTATIONSULTRASCHALLMOTOR**
ROTATIONAL ULTRASONIC MOTOR
MOTEUR ROTATIF À ULTRASONS

(30) Priorität: 30.06.2017 DE 102017114667
(43) Veröffentlichungstag der Anmeldung: 06.05.2020
(73) Patentinhaber: Physik Instrumente (PI) GmbH & Co. KG, 76228 Karlsruhe (DE)
(72) Erfinder: KOC, Burhanettin, 76275 Ettlingen (DE); POLZER, Thomas, 76676 Graben-Neudorf (DE)
(74) Vertreter: Grünecker Patent- und Rechtsanwälte PartG mbB
(86) Internationale Anmeldenummer: PCT/DE2018/100582
(87) Internationale Veröffentlichungsnummer: WO 2019/001632

(56) Entgegenhaltungen:
- EP-A1- 2 590 315
- EP-A1- 2 680 334
- DE-A1- 10 329 863
- DE-A1-102015 005 512
- US-A1- 2006 145 572

## Beschreibung

Die Erfindung betrifft einen Rotationsultraschallmotor gemäß den Ansprüchen 1 bis 15.

Aus der DE 103 14 810 A1 ist ein Rotationsultraschallmotor bekannt, bei welchem der Stator in Form eines hohlzylindrischen Oszillators vorliegt, wobei der Hohlzylinder gemäß dem erfindungsgemäßen Verfahren in eine gekoppelte tangential-axiale Schwingungsmode versetzt wird, so dass der Hohlzylinder periodische Deformationen vollführt. Die Schwingungsgeschwindigkeits-Maxima der entsprechenden tangentialen Komponente bilden sich an den Stirnseiten des Hohlzylinders aus, und die Schwingungsgeschwindigkeits-Maxima der axialen Komponente sind von denen der tangentialen Komponente nur geringfügig beabstandet. In der Mitte der Zylinderhöhe verläuft im Wesentlichen parallel zu den Stirnseiten eine Knotenlinie, auf der die axiale Schwingungskomponente den Wert Null aufweist und auf der die tangentiale Komponente ein Minimum besitzt. Daher ist es vorteilhaft, den Stator im Bereich besagter Knotenlinie zu halten bzw. zu lagern, da somit der Ausbildung der periodischen Deformationen des Stators nur ein minimaler Widerstand entgegensteht. Eine entsprechende Lagerung ist über eine an der äußeren Umfangsfläche des Stators angeordnete Halterung in Form eines Rings realisiert, wobei der Ring über seine innere Umfangsfläche den Stator an dessen äußerer Umfangsfläche im Wesentlichen entlang der Knotenlinie kontaktiert. Der Ring weist über seinen Umfang verteilt mehrere Duchgangslöcher auf, über welche der Ring an einem Gehäuse befestigbar ist, so dass auch der Stator gegenüber dem Gehäuse befestigbar ist.

Die in der DE 103 14 810 A1 beschriebene Anordnung der Halterung an dem Stator ist jedoch relativ aufwändig und wird in der Regel über eine Klebeverbindung realisiert. Hierfür ist es jedoch notwendig, dass die Geometrie des inneren Umfangs der Halterung nur äußerst geringe Abweichungen von der Geometrie des äußeren Umfangs des Stators aufweist, damit eine verlässliche und langlebige Klebeverbindung resultiert. Die Anbringung der Halterung am Außenumfang des Aktors ist zudem raumgreifend, so dass hierüber ein kompakter und raumsparender Rotationsultraschallmotor nur schwer möglich ist.

Klebeverbindungen haben ferner den Nachteil, dass sie in der Regel nicht in Hochvakuumanwendungen aufgrund eines Ausgasens des Klebemittels verwendet werden können.

Daher ist es Aufgabe der Erfindung, einen kompakten Rotationsultraschallmotor mit erweitertem Einsatzbereich bereitzustellen, bei welchem eine verlässliche und langlebige Halterung des Stators bzw. des Ultraschallaktuators auf einfache Weise gelingt, wobei die Halterung der periodischen Deformationen des Ultraschallaktuators nur einen äußerst geringen bzw. vernachlässigbaren Widerstand entgegensetzt.

Diese Aufgabe wird gelöst durch einen Rotationsultraschallmotor gemäß Anspruch 1, wobei die sich daran anschließenden Unteransprüche mindestens zweckmäßige Weiterbildungen beschreiben.

Der im nachfolgenden Teil der Beschreibung an unterschiedlichen Stellen auftauchende Begriff ,im Wesentlichen' im Zusammenhang mit der Angabe von geometrischen Daten wie Winkeln, Dimensionen, Lagen, Orientierungen oder Richtungen ist so zu verstehen, dass die entsprechenden geometrischen Daten eine Abweichung von +/- 5% gegenüber dem jeweils angegebenen geometrischen Datum haben können, wobei diese Abweichung beispielsweise auf Fertigungs- oder Montagetoleranzen zurückzuführen ist.

Der erfindungsgemäße Rotationsultraschallmotor umfasst wenigstens einen Ultraschallaktuator, der vorzugsweise aus einem piezoelektrischen Material besteht, wobei jedoch auch elektrostriktive oder magnetostriktive Materialien denkbar sind. An dem Ultraschallaktuator sind wenigstens eine Erregerelektrode und wenigstens eine allgemeine Elektrode angeordnet, wobei das piezoelektrische Material zwischen der wenigstens einen Erregerelektrode und der wenigstens einen allgemeinen Elektrode angeordnet ist. Durch Anlegen einer geeigneten elektrischen Spannung an den Elektroden kann der Ultraschallaktuator zur Ausbildung periodischer Deformationen angeregt werden, wobei besagte periodische Deformationen durch direkten oder indirekten Kontakt mit einem anzutreibenden Element auf dieses übertragbar sind und so eine Bewegung des anzutreibenden Elements realisierbar ist.

Der Rotationsultraschallmotor weist weiterhin ein Gehäuse mit einem inneren Gehäuseteil und einem äußeren Gehäuseteil auf, wobei der wenigstens eine Ultraschallaktuator zwischen dem inneren Gehäuseteil und dem äußeren Gehäuseteil angeordnet bzw. gelagert ist. Die Halterung bzw. Lagerung des Ultraschallaktuators ist realisiert über eine an dem Gehäuse angeordnete Halteeinrichtung, die wenigstens einen Halteabschnitt aufweist, wobei der wenigstens eine Halteabschnitt in eine diesem zugeordnete und in dem Ultraschallaktuator befindliche Ausnehmung eingreift.

Es kann von Vorteil sein, dass die Halteeinrichtung gebildet ist durch eine Schraube, wobei die Ausnehmung ein mit dem Gewinde der Schraube zusammenwirkendes Gewinde aufweist.

Weiterhin kann es von Vorteil sein, dass das innere Gehäuseteil und/oder das äußere Gehäuseteil einen Gewindeabschnitt aufweisen bzw. aufweist, und die Ausnehmung als Durchgangsloch ausgebildet ist, und die Halteeinrichtung als Schraube ausgebildet ist und durch das Durchgangsloch hindurchragt, wobei das Gewinde der Schraube mit dem Gewindeabschnitt des inneren Gehäuseteils und/oder des äußeren Gehäuseteils zusammenwirkt.

Zudem kann es von Vorteil sein, dass das innere Gehäuseteil und das äußere Gehäuseteil einstückig miteinander ausgeführt sind.

Außerdem kann es von Vorteil sein, dass das innere Gehäuseteil und das äußere Gehäuseteil über stegförmige Federelemente miteinander verbunden sind, wobei der Ultraschallaktuator zwischen den stegförmigen Elementen, vorzugsweise über zwischen den Federelementen und dem Ultraschallaktuator angeordneten Dämpfungselementen, einspannbar ist.

Ferner kann es von Vorteil sein, dass der wenigstens eine Halteabschnitt der Halteeinrichtung einstückig mit dem äußeren Gehäuseteil und/oder mit dem inneren Gehäuseteil ausgeführt ist.

Zusätzlich kann es von Vorteil sein, dass zwischen dem inneren Gehäuseteil und dem äußeren Gehäuseteil ein Spannelement angeordnet ist, das derart mit dem inneren Gehäuseteil oder dem äußeren Gehäuseteil verbunden ist, dass eine wenigstens abschnittsweise Verschiebung des Spannelements gegenüber dem inneren Gehäuseteil und/oder dem äußeren Gehäuseteil möglich ist, wobei durch die Verschiebung ein Anpressen des Halteabschnitts gegen die Ausnehmung realisierbar ist.

Darüber hinaus kann es von Vorteil sein, dass das Spannelement wenigstens einen Eingriffsabschnitt aufweist, der mit einer zugehörigen Ausnehmung in Eingriff ist.

Ebenso kann es von Vorteil sein, dass der wenigstens eine Ultraschallaktuator eine hohlzylindrische Form oder eine Plattenform mit zwei flächenmäßig größten Hauptflächen und die Hauptflächen miteinander verbindenden, flächenmäßig kleineren Seitenflächen bzw. Stirnflächen aufweist, wobei die wenigstens eine Ausnehmung von einer Hauptfläche zu der anderen Hauptfläche weist und vorzugsweise als Durchgangsloch von der einen Hauptfläche zu der anderen Hauptfläche reicht.

Zusätzlich kann es von Vorteil sein, dass an einer der Hauptflächen des Ultraschallaktuators wenigstens zwei jeweils aufgrund eines zwischen diesen befindlichen Trennbereichs voneinander beabstandete Erregerelektroden angeordnet sind, und zwischen jeweils benachbarten Erregerelektroden und den jeweiligen Trennbereich schneidend eine Ausnehmung, vorzugsweise ausgeführt als Durchgangsloch, angeordnet ist.

Des Weiteren kann es von Vorteil sein, dass an wenigstens einer der die beiden Hauptflächen miteinander verbindenden Stirnflächen des Ultraschallaktuators mindestens ein Friktionselement zu dem direkten oder indirekten Kontakt mit dem anzutreibenden Element angeordnet ist.

Es kann auch von Vorteil sein, dass das wenigstens eine Friktionselement mit einem Reibring in Kontakt steht, wobei der Reibring an einer mit dem anzutreibenden Element verbundenen Federscheibe angeordnet ist, welche den Reibring gegen das Friktionselement drückt.

Darüber hinaus kann es von Vorteil sein, dass der Ultraschallaktuator eine hohlzylindrische Form aufweist und an einer der Hauptflächen, welche eine erste Umfangsfläche definiert, wenigstens eine allgemeine Elektrode angeordnet ist und an der anderen Hauptfläche, welche eine zweite Umfangsfläche definiert, wenigstens sechs im Wesentlichen gleich große Erregerelektroden gleichmäßig über den Umfang mit einem zwischen jeweils benachbarten Erregerelektroden befindlichen Trennbereich verteilt angeordnet sind, wobei der Ultraschallaktuator drei gleichmäßig über den Umfang verteilte und als Durchgangslöcher ausgeführte Ausnehmungen aufweist und an wenigstens einer Stirnfläche des Ultraschallaktuators jeweils drei gleichmäßig über den Umfang verteilte und angrenzend an einen jeweiligen Trennbereich platzierte Friktionselemente angeordnet sind, wobei sich die Positionen der Durchgangslöcher und der Friktionselemente entlang des Umfangs voneinander unterscheiden.

Es kann vorteilhaft sein, wenn der Rotationsultraschallmotor drei im Wesentlichen rechteckförmige Ultraschallaktuatoren aufweist, wobei jeweils benachbarte Ultraschallaktuatoren einen Winkel von im Wesentlichen 60° zwischen sich einschließen, wobei jeweils an einer der Hauptflächen wenigstens eine allgemeine Elektrode angeordnet ist und an der anderen Hauptfläche wenigstens zwei im Wesentlichen gleich große Erregerelektroden angeordnet sind, wobei jeder der rechteckförmigen Ultraschallaktuatoren zwei jeweils im Bereich der Erregerelektroden angeordnete und als Durchgangslöcher ausgeführte Ausnehmungen aufweist, und jeweils an einer der längeren Seitenflächen des Ultraschallaktuators angrenzend an einen jeweiligen Trennbereich ein Friktionselement angeordnet ist.

Ebenso kann es vorteilhaft sein, wenn innerhalb des inneren Gehäuseteils und/oder innerhalb des äußeren Gehäuseteils ein Lagerelement zur drehbaren Lagerung des anzutreibenden Elements angeordnet ist.

Im Folgenden werden Ausführungsbeispiele der Erfindung anhand der beigefügten Figuren beschrieben.

Es zeigen:
Figur 1: Ausführungsform eines erfindungsgemäßen Rotationsultraschallmotors mit einem hohlzylindrischen Ultraschallaktuator
Figur 2: Ultraschallaktuator des Rotationsultraschallmotors gemäß Figur 1
Figur 3: Weitere Ausführungsform eines erfindungsgemäßen Rotationsultraschallmotors mit drei rechteckförmigen Ultraschallaktuatoren ohne ein anzutreibendes Element

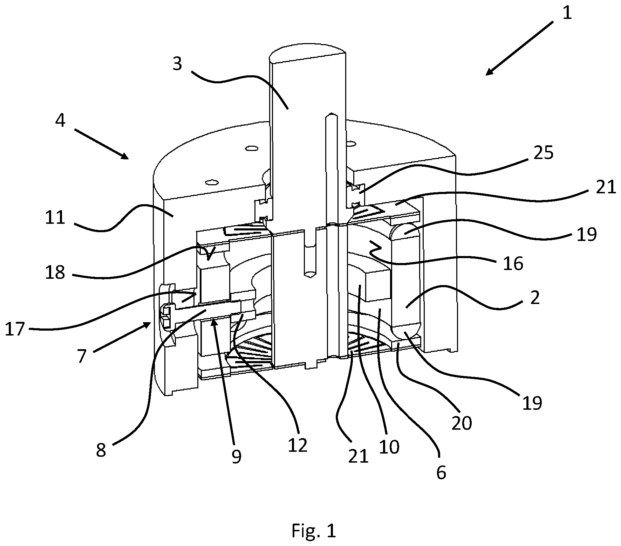

Figur 1 zeigt eine Ausführungsform eines erfindungsgemäßen Rotationsultraschallmotors 1. Dieser umfasst einen Ultraschallaktuator 2 in Form eines Hohlzylinders aus einem piezoelektrischen Material bzw. aus einem piezokeramischen Material. An der gesamten inneren Umfangsfläche des Ultraschallaktuators, welche eine Hauptfläche 16 des Ultraschallaktuators definiert, ist eine allgemeine Elektrode 6 angeordnet, während an der äußeren Umfangsfläche, welche eine weitere Hauptfläche 17 definiert, mehrere und jeweils voneinander beabstandete Erregerelektroden, welche in Fig. 1 nicht zu erkennen sind, angeordnet sind. Somit ist das piezoelektrische bzw. piezokeramische Material als Schicht zwischen den Erregerelektroden und der allgemeinen Elektrode 6 angeordnet. Durch Anlegen einer geeigneten elektrischen Spannung an den Elektroden wird in dem piezoelektrischen bzw. piezokeramischen Material ein elektrisches Feld erzeugt, welches aufgrund des inversen piezoelektrischen Effekts zu einer Deformation des Ultraschallaktuators führt. Durch entsprechende periodische Spannungen sind gezielte periodische Deformationen des Ultraschallaktuators erzielbar, die zu einer effektiven Antriebsbewegung des Rotationsultraschallmotors führen.

Es ist denkbar, dass der Ultraschallaktuator mehr als eine Schicht des piezoelektrischen Materials aufweist, wobei zwischen benachbarten Schichten jeweils entsprechende Elektroden angeordnet sind (sog. Multilayer-Aktuator). Hierbei ist es möglich, dass die Schichten des piezoelektrischen Materials und der Elektroden in einer radialen Richtung oder in einer axialen Richtung des Hohlzylinders gestapelt sind.

An den beiden Stirnseiten 18 des Hohlzylinders sind über den Umfang verteilt jeweils drei Friktionselemente 19 in Form von Halbkugeln angeordnet, von denen in Fig. 1 jedoch nur jeweils eines der Friktionselemente zu erkennen ist. Mit den jeweils drei an einer der beiden Stirnflächen angeordneten Friktionselementen 19 in Kontakt steht ein Reibring 20, wobei jeder der beiden Reibringe 20 über eine Federscheibe 21 gegen die Friktionselemente 19 gedrückt ist, so dass eine effektive Übertragung der Bewegung der Reibelemente 19 aufgrund der periodischen Deformationen des Ultraschallaktuators 2 auf die Federscheiben 21 realisierbar ist. Da die Federscheiben 21 ihrerseits fest mit dem anzutreibenden Element 3 in Form einer Welle verbunden sind, gelingt über den Antrieb der Federscheiben 21 ein rotatorischer Antrieb des anzutreibenden Elements 3. Das anzutreibende Element 3 ist hierbei mittels eines Lagerelements 25 in dem Gehäuse 4 rotatorisch beweglich gelagert.

Der hohlzylindrische Ultraschallaktuator 2 ist in einem entsprechenden Gehäuse 4 angeordnet, wobei das Gehäuse 4 einen inneren Gehäuseteil 10 in Form eines Rings und einen von der Form her ähnlichen äußeren Gehäuseteil 11 aufweist und der Ultraschallaktuator zwischen dem inneren Gehäuseteil 10 und dem äußeren Gehäuseteil 11 angeordnet ist. Eine Halteeinrichtung 7 umfasst einen Halteabschnitt 8 in Form einer Schraube bzw. eines Schraubenschafts und eine Ausnehmung 9 in dem Ultraschallaktuator in Form eines Durchgangslochs. Während der Kopf der Schraube an dem äußeren Gehäuseteil 11 anliegt, ragt der Schraubenschaft durch die Ausnehmung 9 des Ultraschallaktuators hindurch, wobei der Durchmesser des Schraubenschafts im Wesentlichen dem Durchmesser der Ausnehmung des Ultraschallaktuators entspricht. Zumindest der dem Schraubenkopf gegenüberliegende distale Abschnitt des Schraubenschafts besitzt ein Gewinde, welches in den in dem inneren Gehäuseteil entsprechend vorgesehenen komplementären Gewindeabschnitt 12 eingreift bzw. mit diesem zusammenwirkt. Dadurch, dass die Ausnehmung 9 an einer solchen Stelle des Ultraschallaktuators angeordnet ist, an welcher während des Betriebs nur geringfügige bzw. vernachlässigbare Bewegungen bzw. Deformationen stattfinden, gelingt eine den periodischen Deformationen höchstens vernachlässigbaren Widerstand entgegensetzende Halterung bzw. Lagerung des Ultraschallaktuators.

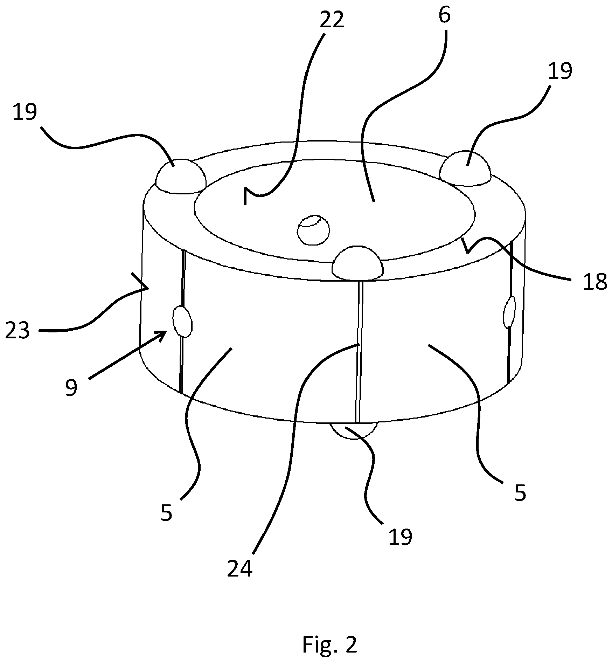

Figur 2 zeigt als Einzelheit den Ultraschallaktuator des Rotationsultraschallmotors gemäß Figur 1. Hier sind nun deutlich die drei an der in Figur 2 oberen Stirnfläche 18 des als Hohlzylinder geformten Ultraschallaktuators angeordneten Friktionselemente 19 in Form von Halbkugeln zu erkennen. Neben der Halbkugelform sind natürlich vielfältige weitere Geometrien für die Friktionselement denkbar.

Die gesamte innere Umfangsfläche 22 ist bedeckt mit einer an dieser angeordneten allgemeinen Elektrode 6, während an der äußeren Umfangsfläche 23 gleichmäßig über den Umfang verteilt insgesamt sechs identisch ausgebildete Erregerelektroden angeordnet sind, wobei zwischen benachbarten Erregerelektroden 5 jeweils ein Trennbereich 24 vorhanden ist, welcher die jeweiligen benachbarten Erregerelektroden 5 voneinander trennt und diese elektrisch voneinander isoliert sind.

Der Ultraschallaktuator weist drei äquidistant über den Umfang des Hohlzylinders verteilte Ausnehmungen 9 in Form von Durchgangslöchern auf, die jeweils einen Trennbereich 24 schneiden. Es ist jedoch auch denkbar, dass die Ausnehmungen 9 an einer anderen Stelle vorgesehen sind, beispielsweise in der Mitte der jeweiligen Erregerelektrode 5.

Auch die drei Friktionselemente 19 einer Stirnfläche 18 sind hinsichtlich des Umfangs des Hohlzylinders äquidistant angeordnet, und jedes der Friktionselemente ist im Gebiet des jeweiligen Trennbereichs 24 angeordnet. Hierbei sind die Friktionselemente 19 der beiden Stirnflächen 18 in gegenüberliegender Anordnung angebracht.

Die Positionen der Friktionselemente 19 hinsichtlich des Umfangs des Hohlzylinders unterscheiden sich von den Positionen der Ausnehmungen 9 bezüglich des Umfangs des Hohlzylinders. Hierbei sind die Friktionselemente 19 jeweils in der Mitte zwischen den beiden benachbarten Ausnehmungen 9 angeordnet. Da sowohl benachbarte Friktionselemente 19, als auch benachbarte Ausnehmungen 9 einen Abstand mit Bezug auf den Umfangswinkel des Hohlzylinders von im Wesentlichen 120° aufweisen, beträgt der Abstand zwischen einem Friktionselement und einer benachbarten Ausnehmung mit Bezug auf den Umfangswinkel im Wesentlichen 60°.

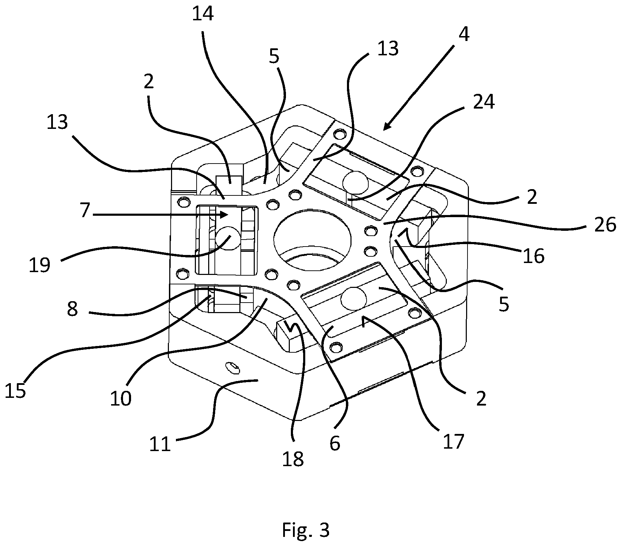

Figur 3 zeigt eine weitere Ausführungsform eines erfindungsgemäßen Rotationsultraschallmotors, bei welcher das anzutreibende Element aus Übersichtlichkeitsgründen weggelassen ist. Im Gegensatz zum Ausführungsbeispiel gemäß Figur 1 weist der Rotationsultraschallmotor keinen hohlzylindrischen Ultraschallaktuator auf, sondern stattdessen drei im Wesentlichen rechteckig geformte Ultraschallaktuatoren 2, wobei jeweils benachbarte Ultraschallaktuatoren einen Winkel von im Wesentlichen 60° zwischen sich einschließen.

Jeder der rechteckförmigen Ultraschallaktuatoren 2 weist an seiner Hauptfläche 16 zwei identisch geformte Erregerelektroden 5 auf, die durch den Trennbereich 24 voneinander beabstandet sind. Auf der gegenüberliegenden Hauptfläche 17 weist jeder der drei Ultraschallaktuatoren eine allgemeine Elektrode auf, die im Wesentlichen die gesamte Hauptfläche 17 bedeckt.

An jeder der beiden gegenüberliegenden Stirnflächen 18 eines Ultraschallaktuators ist im Wesentlichen in deren Mitte und im Bereich des Trennbereichs 24 ein Friktionselement 19 angeordnet, wobei in Figur 3 nur jeweils eines der beiden Friktionselemente sichtbar ist.

Die drei Ultraschallaktuatoren 2 sind in dem Gehäuse 4 zwischen dem inneren Gehäuseteil 10 und dem äußeren Gehäuseteil 11 angeordnet, wobei das innere Gehäuseteil 10 mit dem äußeren Gehäuseteil 11 mittels zweier gegenüberliegend angeordneter Verbindungselemente 26 miteinander verbunden ist. Die Verbindungselemente 26 weisen als Federelemente 13 ausgebildete und elastisch deformierbare Stegabschnitte auf, welche in Kontakt mit den Stirnflächen 18 des jeweiligen Ultraschallaktuators stehen und somit die Ultraschallaktuatoren jeweils zwischen den zugehörigen Federelementen 13 eingespannt sind. Vorzugsweise sind zwischen den Federelementen 13 und der jeweiligen Stirnfläche 18 Dämpfungselemente angeordnet.

Als Zapfen und einstückig mit dem inneren Gehäuseteil 10 ausgebildete Halteabschnitte 8 der jeweiligen Halteeinrichtung 7 greifen in zugehörige Ausnehmungen der Ultraschallaktuatoren, welche in Fig. 3 jedoch nicht zu erkennen sind, ein. Hierbei sind die Ausnehmungen im Bereich der an der Hauptfläche 16 angeordneten Erregerelektroden 5 angeordnet.

Das Gehäuse 4 weist ein Spannelement 14 auf, welches zwischen dem inneren Gehäuseteil 10 und dem äußeren Gehäuseteil 11 angeordnet ist, wobei das Spannelement 14 derart mit dem äußeren Gehäuseteil 11 verbunden ist, dass eine wenigstens abschnittsweise Verschiebung des Spannelements 14 gegenüber dem inneren Gehäuseteil 10 möglich ist. Dadurch, dass Eingriffsabschnitte 15 des Spannelements 14 mit den Ausnehmungen 9 von der Hauptfläche 17 her in Eingriff sind, gelingt durch die Verschiebung des Spannelements 14 ein Anpressen des jeweiligen Halteabschnitts 8 gegen die jeweilige Ausnehmung 9, so dass eine weitgehend spielfreie Lagerung der Ultraschallaktuatoren ermöglicht ist.

### Bezugszeichenliste

- 1: Rotationsultraschallmotor
- 2: Ultraschallaktuator
- 3: Anzutreibendes Element
- 4: Gehäuse
- 5: Erregerelektrode
- 6: Allgemeine Elektrode
- 7: Halteeinrichtung
- 8: Halteabschnitt
- 9: Ausnehmung
- 10: Inneres Gehäuseteil
- 11: Äußeres Gehäuseteil
- 12: Gewindeabschnitt
- 13: Federelement
- 14: Spannelement
- 15: Eingriffsabschnitt
- 16: Hauptfläche (des Ultraschallaktuators)
- 17: Hauptfläche (des Ultraschallaktuators)
- 18: Stirnfläche (des Ultraschallaktuators)
- 19: Friktionselement
- 20: Reibring
- 21: Federscheibe
- 22: Erste Umfangsfläche
- 23: Zweite Umfangsfläche
- 24: Trennbereich
- 25: Lagerelement
- 26: Verbindungselement

## Patentansprüche

1. Rotationsultraschallmotor (1) mit wenigstens einem Ultraschallaktuator (2), einem anzutreibenden Element (3) und ein inneres Gehäuseteil (10) und ein äußeres Gehäuseteil (11) aufweisendes Gehäuse (4), wobei der Ultraschallaktuator (2) ein piezoelektrisches oder elektrostriktives oder magnetostriktives Material aufweist, welches zwischen wenigstens einer Erregerelektrode (5) und wenigstens einer allgemeinen Elektrode (6) angeordnet ist, wobei der innere Gehäuseteil (10) und der äußere Gehäuseteil (11) konzentrisch zueinander angeordnet sind und der Ultraschallaktuator (2) in dem Gehäuse (4) in einem vom äußeren Gehäuseteil (11) umschlossenen Raum zwischen dem inneren Gehäuseteil (10) und dem äußeren Gehäuseteil (11) angeordnet ist und mit dem anzutreibenden Element (3) direkt oder indirekt in Kontakt steht, so dass die in dem Ultraschallaktuator (2) durch elektrische Anregung erzeugten periodischen Deformationen auf das anzutreibende Element (3) übertragbar sind und eine Antriebsbewegung desselben bewirken, **dadurch gekennzeichnet, dass** der Ultraschallaktuator (2) gelagert ist über eine an dem Gehäuse (4) angeordnete Halteeinrichtung (7) mit wenigstens einem Halteabschnitt (8), welcher in eine dem jeweiligen Halteabschnitt (8) zugeordnete und in dem Ultraschallaktuator (2) befindliche Ausnehmung (9) eingreift.

2. Rotationsultraschallmotor nach Anspruch 1, **dadurch gekennzeichnet, dass** die Halteeinrichtung (7) gebildet ist durch eine Schraube, wobei die Ausnehmung (9) mit dem Gewinde der Schraube ein zusammenwirkendes Gewinde aufweist.

3. Rotationsultraschallmotor nach Anspruch 1 oder 2, **dadurch gekennzeichnet, dass** das innere Gehäuseteil (10) und/oder das äußere Gehäuseteil (11) einen Gewindeabschnitt (12) aufweisen kann bzw. aufweist, und die Ausnehmung (9) als Durchgangsloch ausgebildet ist, und die Halteeinrichtung (7) als Schraube ausgebildet ist und durch das Durchgangsloch hindurchragt, wobei ein Gewinde der Schraube mit dem Gewindeabschnitt (12) des inneren Gehäuseteils (10) und/oder des äußeren Gehäuseteils (11) zusammenwirkt.

4. Rotationsultraschallmotor nach einem der vorhergehenden Ansprüche, **dadurch gekennzeichnet, dass** das innere Gehäuseteil (10) und das äußere Gehäuseteil (11) einstückig miteinander ausgeführt sind.

5. Rotationsultraschallmotor nach einem der vorhergehenden Ansprüche, **dadurch gekennzeichnet, dass** das innere Gehäuseteil (10) und das äußere Gehäuseteil (11) über stegförmige Federelemente (13) miteinander verbunden sind, wobei der Ultraschallaktuator (2) zwischen den stegförmigen Federelementen (13), vorzugsweise über zwischen den Federelementen (13) und dem Ultraschallaktuator (2) angeordneten Dämpfungselementen, einspannbar ist.

6. Rotationsultraschallmotor nach einem der vorhergehenden Ansprüche, **dadurch gekennzeichnet, dass** wenigstens ein Halteabschnitt (8) der Halteeinrichtung (7) einstückig mit dem äußeren Gehäuseteil (11) und/oder mit dem inneren Gehäuseteil (10) ausgeführt ist.

7. Rotationsultraschallmotor nach einem der vorhergehenden Ansprüche, **dadurch gekennzeichnet, dass** innerhalb des inneren Gehäuseteils (10) und/oder innerhalb des äußeren Gehäuseteils (11) ein Lagerelement (25) zur drehbaren Lagerung des anzutreibenden Elements (3) angeordnet ist.

8. Rotationsultraschallmotor nach einem der vorhergehenden Ansprüche, **dadurch gekennzeichnet, dass** zwischen dem inneren Gehäuseteil (10) und dem äußeren Gehäuseteil (11) ein Spannelement (14) angeordnet ist, das derart mit dem inneren Gehäuseteil (10) oder dem äußeren Gehäuseteil (11) verbunden ist, dass eine wenigstens abschnittsweise Verschiebung des Spannelements (14) gegenüber dem inneren Gehäuseteil (10) und/oder dem äußeren Gehäuseteil (11) möglich ist, wobei durch die Verschiebung ein Anpressen des Halteabschnitts (8) gegen die Ausnehmung (9) realisierbar ist.

9. Rotationsultraschallmotor nach Anspruch 8, **dadurch gekennzeichnet, dass** das Spannelement (14) wenigstens einen Eingriffsabschnitt (15) aufweist, der mit einer zugehörigen Ausnehmung (9) in Eingriff ist.

10. Rotationsultraschallmotor nach einem der vorhergehenden Ansprüche, **dadurch gekennzeichnet, dass** wenigstens ein Ultraschallaktuator (2) eine hohlzylindrische Form oder eine Plattenform mit zwei flächenmäßig größten Hauptflächen (16, 17) aufweist, wobei die wenigstens eine Ausnehmung (9) von einer Hauptfläche (16, 17) zu der anderen Hauptfläche (16, 17) weist und vorzugsweise als Durchgangsloch von der einen Hauptfläche (16, 17) zu der anderen Hauptfläche (16, 17) reicht.

11. Rotationsultraschallmotor nach Anspruch 10, **dadurch gekennzeichnet, dass** an einer der Hauptflächen (16, 17) des Ultraschallaktuators (2) wenigstens zwei jeweils aufgrund eines zwischen diesen befindlichen Trennbereichs (24) voneinander beabstandete Erregerelektroden (5) angeordnet sind, und zwischen jeweils benachbarten Erregerelektroden (5) und den jeweiligen Trennbereich (24) schneidend eine Ausnehmung (9), vorzugsweise ausgeführt als Durchgangsloch, angeordnet ist.

12. Rotationsultraschallmotor nach Anspruch 10 oder 11, **dadurch gekennzeichnet, dass** an wenigstens einer der die beiden Hauptflächen (16, 17) miteinander verbindenden Stirnflächen (18) des Ultraschallaktuators mindestens ein Friktionselement (19) zu dem direkten oder indirekten Kontakt mit dem anzutreibenden Element (3) angeordnet ist.

13. Rotationsultraschallmotor nach Anspruch 12, **dadurch gekennzeichnet, dass** wenigstens ein Friktionselement (19) mit einem Reibring (20) in Kontakt steht, wobei der Reibring (20) an einer mit dem anzutreibenden Element (3) verbundenen Federscheibe (21) angeordnet ist, welche den Reibring (20) gegen das Friktionselement (19) drückt.

14. Rotationsultraschallmotor nach einem der Ansprüche 10 bis 13, **dadurch gekennzeichnet, dass** der Ultraschallaktuator (2) eine hohlzylindrische Form aufweist und an einer der Hauptflächen (16, 17), welche eine erste Umfangsfläche (22) definiert, wenigstens eine allgemeine Elektrode (6) angeordnet ist und an der anderen Hauptfläche (16, 17), welche eine zweite Umfangsfläche (23) definiert, wenigstens sechs im Wesentlichen gleich große Erregerelektroden (5) gleichmäßig über den Umfang mit einem zwischen jeweils benachbarten Erregerelektroden (5) befindlichen Trennbereich (24) verteilt angeordnet sind, wobei der Ultraschallaktuator (2) drei gleichmäßig über den Umfang verteilte und als Durchgangslöcher ausgeführte Ausnehmungen (9) aufweist und an wenigstens einer Stirnfläche (18) des Ultraschallaktuators jeweils drei gleichmäßig über den Umfang verteilte und angrenzend an einen jeweiligen Trennbereich (24) platzierte Friktionselemente (19) angeordnet sind, wobei sich die Positionen der Durchgangslöcher und der Friktionselemente (19) entlang des Umfangs voneinander unterscheiden.

15. Rotationsultraschallmotor nach einem der Ansprüche 10 bis 13, **dadurch gekennzeichnet, dass** dieser drei im Wesentlichen rechteckförmige Ultraschallaktuatoren (2) aufweist, wobei jeweils benachbarte Ultraschallaktuatoren (2) einen Winkel von im Wesentlichen 60° zwischen sich einschließen, wobei jeweils an einer der Hauptflächen (16, 17) wenigstens eine allgemeine Elektrode (6) angeordnet ist und an der anderen Hauptfläche (16, 17) wenigstens zwei im Wesentlichen gleich große Erregerelektroden (5) angeordnet sind, wobei jeder der rechteckförmigen Ultraschallaktuatoren (2) zwei jeweils im Bereich der Erregerelektroden (5) angeordnete und als Durchgangslöcher ausgeführte Ausnehmungen (9) aufweist, und jeweils an einer der längeren Seitenflächen des Ultraschallaktuators angrenzend an einen jeweiligen Trennbereich (24) ein Friktionselement (19) angeordnet ist.

## Claims

1. Rotary ultrasonic motor (1) with at least one ultrasonic actuator (2), an element (3) to be driven and a casing (4) comprising an inner casing member (10) and an outer casing member (11), where said ultrasonic actuator (2) comprises piezoelectric or electrostrictive or magnetostrictive material which is arranged between at least one excitation electrode (5) and at least one general electrode (6), where said inner casing member (10) and said outer casing member (11) are arranged concentrically and said ultrasonic actuator (2) is arranged in said casing (4) between said inner casing member (10) and said outer casing member (11) in a space enclosed by the outer casing member (11) and is directly or indirectly in contact with said element (3) to be driven, so that the periodic deformations generated in said ultrasonic actuator (2) by electrical excitation are transferable to said element (3) to be driven and cause a drive motion of the latter, **characterized in that** said ultrasonic actuator (2) is mounted by way of a retaining device (7) arranged on said casing (4) with at least one retaining section (8) which engages in a recess (9) that is associated with said respective retaining section (8) and disposed in said ultrasonic actuator (2).

2. Rotary ultrasonic motor according to claim 1, **characterized in that** said retaining device (7) is formed by a screw, where said recess (9) comprises a thread interacting with the thread of said screw.

3. Rotary ultrasonic motor according to claim 1 or 2, **characterized in that** said inner casing member (10) and/or said outer casing member (11) comprise a threaded portion (12) and that said recess (9) is formed as a through hole, and said retaining device (7) is formed as a screw and protrudes through said through hole, where the thread of said screw interacts with said threaded portion (12) of said inner casing member (10) and/or said outer casing member (11).

4. Rotary ultrasonic motor according to one of the preceding claims, **characterized in that** said inner casing member (10) and said outer casing member (11) are embodied integrally formed with each other.

5. Rotary ultrasonic motor according to one of the preceding claims, **characterized in that** said inner casing member (10) and said outer casing member (11) are connected to each other by way of web-shaped spring elements (13), where said ultrasonic actuator (2) can be clamped between said web-shaped spring elements (13), preferably by way of damping elements arranged between said spring elements (13) and said ultrasonic actuator (2).

6. Rotary ultrasonic motor according to one of the preceding claims, **characterized in that** said at least one retaining section (8) of said retaining device (7) is formed integrally with said outer casing member (11) and/or with said inner casing member (10).

7. Rotary ultrasonic motor according to one of the preceding claims, **characterized in that** a bearing element (25) for rotatably mounting said element (3) to be driven is arranged within said inner casing member (10) and/or within said outer casing member (11).

8. Rotary ultrasonic motor according to one of the preceding claims, **characterized in that** a clamping element (14) is arranged between said inner casing member (10) and said outer casing member (11) and is connected to said inner casing member (10) or said outer casing member (11) such that the displacement of said clamping element (14), at least in sections, relative to said inner casing member (10) and/or said outer casing member (11) is possible, where pressing said retaining section (8) against said recess (9) is feasible with the displacement.

9. Rotary ultrasonic motor according to claim 8, **characterized in that** said clamping element (14) comprises at least one engagement section (15) which is in engagement with an associated recess (9).

10. Rotary ultrasonic motor according to one of the preceding claims, **characterized in that** said at least one ultrasonic actuator (2) has a hollow cylindrical shape or a plate shape with two main surfaces (16, 17) that are largest in terms of area, where said at least one recess (9) points from one main surface (16, 17) to said other main surface (16, 17) and preferably extends as a through hole from one main surface (16, 17) to the other main surface (16, 17).

11. Rotary ultrasonic motor according to claim 10, **characterized in that** at least two excitation electrodes (5) on one of said main surfaces (16, 17) of said ultrasonic actuator (2) are respectively arranged spaced from each other due to a separation region (24) disposed between them, and a recess (9), preferably embodied as a through hole, is arranged between respectively adjacent excitation electrodes (5) and intersecting said respective separation region (24).

12. Rotary ultrasonic motor according to claim 10 or 11, **characterized in that** at least one friction element (19) is arranged on at least one of said two face surfaces (18) of said ultrasonic actuator connecting said main surfaces (16, 17) for direct or indirect contact with said element (3) to be driven.

13. Rotary ultrasonic motor according to claim 12, **characterized in that** said at least one friction element (19) is in contact with a friction ring (20), where said friction ring (20) is arranged on a spring disk (21) that is connected to said element (3) to be driven and that presses said friction ring (20) against said friction element (19).

14. Rotary ultrasonic motor according to one of the claims 10 to 13, **characterized in that** said ultrasonic actuator (2) has a hollow cylindrical shape, and at least one general electrode (6) is arranged on one of said main surfaces (16, 17), that defines a first circumferential surface (22), and at least six substantially equally sized excitation electrodes (5) are arranged on said other main surface (16, 17), that defines a second circumferential surface, evenly distributed over the circumference with a separation region (24) disposed between respectively adjacent excitation electrodes (5), where said ultrasonic actuator (2) comprises three recesses (9) distributed evenly over the circumference and embodied as through holes, and at least three friction elements (19) are respectively arranged on at least one face surface (18) of said ultrasonic actuator distributed evenly over the circumference and positioned adjacent to a respective separation region (24), where the positions of said through holes and said friction elements (19) along the circumference differ from each other.

15. Rotary ultrasonic motor according to one of the claims 10 to 13, **characterized in that** it comprises three substantially rectangular ultrasonic actuators (2), where respectively adjacent ultrasonic actuators (2) define an angle of substantially 60° between them, where at least one general electrode (6) is respectively arranged on one of said main surfaces (16, 17) and at least two substantially equally sized excitation electrodes (5) are arranged on said other main surface (16, 17), where each of said rectangular ultrasonic actuators (2) comprises two recesses (9), each arranged in the region of said excitation electrodes (5) and embodied as through holes, and a respective friction element (19) is respectively arranged on one of the longer side surfaces of said ultrasonic actuator adjacent to a respective separation region (24).

## Revendications

1. Moteur rotatif à ultrasons (1) comprenant au moins un actionneur à ultrasons (2), un élément à entraîner (3) et un boîtier (4) comportant un élément de boîtier interne (10) et un élément de boîtier externe (11), dans lequel l'actionneur à ultrasons (2) comporte un matériau piézoélectrique, électrostrictif ou magnétostrictif qui est agencé entre au moins une électrode d'excitation (5) et au moins une électrode générale (6), dans lequel l'élément de boîtier interne (10) et l'élément de boîtier externe (11) sont agencés concentriquement, et l'actionneur à ultrasons (2) est agencé dans le boîtier (4) dans un espace entouré par l'élément de boîtier externe (11) entre l'élément de boîtier interne (10) et l'élément de boîtier externe (11) et est en contact direct ou indirect avec l'élément à entraîner (3), de telle sorte que les déformations périodiques produites par excitation électrique dans l'actionneur à ultrasons (2) sont transférables sur l'élément à entraîner (3) et provoquent un déplacement d'entraînement de celui-ci,
**caractérisé en ce que** l'actionneur à ultrasons (2) est supporté par un dispositif de maintien (7) agencé sur le boîtier (4) avec au moins une section de maintien (8) qui s'engage dans une cavité (9) associée à la section de maintien respective (8) dans l'actionneur à ultrasons (2).

2. Moteur rotatif à ultrasons selon la revendication 1, **caractérisé en ce que** le dispositif de maintien (7) est constitué d'une vis, dans lequel la cavité (9) comporte un filetage associé au filetage de la vis.

3. Moteur rotatif à ultrasons selon la revendication 1 ou 2, **caractérisé en ce que** l'élément de boîtier interne (10) et/ou l'élément de boîtier externe (11) peuvent comporter ou comportent une section de filetage (12) et la cavité (9) est réalisée comme un trou traversant, et le dispositif de maintien (7) est réalisé comme une vis et ressort à travers le trou traversant, dans lequel un filetage de la vis interagit avec la section de filetage (12) de l'élément de boîtier interne (10) et/ou de l'élément de boîtier externe (11) .

4. Moteur rotatif à ultrasons selon l'une des revendications précédentes, **caractérisé en ce que** l'élément de boîtier interne (10) et l'élément de boîtier externe (11) sont réalisés en une seule pièce intégrée.

5. Moteur rotatif à ultrasons selon l'une des revendications précédentes, **caractérisé en ce que** l'élément de boîtier interne (10) et l'élément de boîtier externe (11) sont connectés entre eux via des éléments de ressort en forme de barre (13), dans lequel l'actionneur à ultrasons (2) peut être fixé entre les éléments de ressort en forme de barre (13), préférablement via des éléments d'amortissement agencés entre les éléments de ressort (13) et l'actionneur à ultrasons (2).

6. Moteur rotatif à ultrasons selon l'une des revendications précédentes, **caractérisé en ce qu'**au moins une section de maintien (8) du dispositif de maintien (7) est réalisée d'une seule pièce avec l'élément de boîtier externe (11) et/ou l'élément de boîtier interne (10).

7. Moteur rotatif à ultrasons selon l'une des revendications précédentes, **caractérisé en ce qu'**un élément de support (25) pour le support rotatif de l'élément à entraîner (3) est agencé dans l'élément de boîtier interne (10) et/ou dans l'élément de boîtier externe (11).

8. Moteur rotatif à ultrasons selon l'une des revendications précédentes, **caractérisé en ce qu'**entre l'élément de boîtier interne (10) et l'élément de boîtier externe (11) est agencé un élément de serrage (14) qui est connecté avec l'élément de boîtier interne (10) ou avec l'élément de boîtier externe (11) de telle sorte qu'un glissement au moins par section de l'élément de serrage (14) par rapport à l'élément de boîtier interne (10) et/ou l'élément de boîtier externe (11) est possible, dans lequel le glissement peut produire une compression de la section de maintien (8) contre la cavité (9).

9. Moteur rotatif à ultrasons selon la revendication 8, **caractérisé en ce que** l'élément de serrage (14) comporte au moins une section d'engagement (15) qui est engagée dans la cavité correspondante (9).

10. Moteur rotatif à ultrasons selon l'une des revendications précédentes, **caractérisé en ce qu'**au moins un actionneur à ultrasons (2) présente une forme cylindrique creuse ou une forme de plaque avec deux surfaces principales (16, 17) de plus grande superficie, dans lequel ladite au moins une cavité (9) s'étend d'une surface principale (16, 17) à l'autre surface principale (16, 17) et s'étend préférablement comme un trou traversant d'une surface principale (16, 17) à l'autre surface principale (16, 17).

11. Moteur rotatif à ultrasons selon la revendication 10, **caractérisé en ce qu'**au moins deux électrodes d'excitation (5) espacées par une zone de séparation (24) située entre elles sont agencées sur l'une des surfaces principales (16, 17) de l'actionneur à ultrasons(2), et une cavité (9), réalisée préférablement comme un trou traversant, est agencée entre les électrodes d'excitation (5) adjacentes et traverse la zone de séparation (24) correspondante.

12. Moteur rotatif à ultrasons selon la revendication 10 ou 11, **caractérisé en ce qu'**au moins un élément de friction (19) est agencé sur au moins l'une des surfaces avant (18) de l'actionneur à ultrasons qui connectent entre elles les deux surfaces principales (16, 17) pour établir un contact direct ou indirect avec l'élément à entraîner (3).

13. Moteur rotatif à ultrasons selon la revendication 12, **caractérisé en ce qu'**au moins un élément de friction (19) est en contact avec un anneau de friction (20), dans lequel l'anneau de friction (20) est agencé sur une rondelle élastique (21) connectée à l'élément à entraîner (3) qui comprime l'anneau de friction (20) contre l'élément de friction (19).

14. Moteur rotatif à ultrasons selon l'une des revendications 10 à 13, **caractérisé en ce que** l'actionneur à ultrasons (2) présente une forme cylindrique creuse, et **en ce qu'**au moins une électrode générale (6) est agencée sur l'une des surfaces principales (16, 17), qui définit une première surface circonférentielle (22), et sur l'autre surface principale (16, 17), qui définit une deuxième surface circonférentielle (23), au moins six électrodes d'excitation (5) essentiellement de même taille sont distribuées uniformément sur la périphérie avec chaque fois une zone de séparation (24) entre les électrodes d'excitation (5) adjacentes, dans lequel l'actionneur à ultrasons (2) comporte trois cavités (9) distribuées uniformément sur la périphérie et réalisées comme des trous traversants, et trois éléments de friction (19) sont distribués uniformément sur la périphérie et adjacents à une zone de séparation correspondante (24) sur au moins une surface avant (18) de l'actionneur à ultrasons, dans lequel les positions des trous traversants et des éléments de friction (19) sont espacées entre elles sur la périphérie.

15. Moteur rotatif à ultrasons selon l'une des revendications 10 à 13, **caractérisé en ce qu'**il comprend trois actionneurs à ultrasons (2) essentiellement rectangulaires, dans lequel les actionneurs à ultrasons adjacents (2) forment chaque fois entre eux un angle d'environ 60°, dans lequel au moins une électrode générale (6) est agencée chaque fois sur l'une des surfaces principales (16, 17) et au moins deux électrodes d'excitation (5) essentiellement de même de taille sont agencées sur l'autre surface principale (16, 17), dans lequel chacun des actionneurs à ultrasons rectangulaires (2) comporte deux cavités (9) agencées chacune dans la zone des électrodes d'excitation (5) et réalisées comme des trous traversants, et un élément de friction (19) est agencé chaque fois sur l'une des surfaces latérales plus longues de l'actionneur à ultrasons de manière adjacente à une zone de séparation respective (24).
